# EUROPEAN PATENT SPECIFICATION

(11) **EP 1 687 527 B1**
(45) Date of publication and mention of the grant of the patent: **02.05.2007**
(21) Application number: 04798759.9
(22) Date of filing: 01.11.2004
(51) Int. Cl.: F03B 13/18

(54) **ENERGY GENERATING SYSTEM USING SEA WAVES**
MEERESWELLEN VERWENDENDES ENERGIEERZEUGUNGSSYSTEM
SYSTEME DE PRODUCTION D'ENERGIE A L'AIDE DE LA HOULE

(30) Priority: 28.11.2003 ES 200302809
(43) Date of publication of application: 09.08.2006
(73) Proprietor: ARLAS INVEST, S.L., 08008 Barcelona (ES)
(72) Inventor: SERRANO MOLINA, Jose Antonio ARLAS INVEST, S.L., E-08008 BARCELONA (ES)
(74) Representative: Ponti Sales, Adelaida
(86) International application number: PCT/IB2004/003580
(87) International publication number: WO 2005/054668

(56) References cited:
- DE-A1- 2 505 290
- US-A- 4 228 360
- US-A1- 2002 131 824

## Description

This invention relates to an energy generating system using sea waves.

### BACKGROUND OF THE INVENTION

Currently known are various systems for obtaining energy from the waves of the sea, based on floating bodies that include flexible elements for fixing them to the sea bed. These systems have the disadvantage that they include complex devices, in which the energy generating mechanisms are in direct contact with the sea water and are therefore subject to a high level of corrosion. Such systems have the further disadvantage that they do not adapt to any kind of sea level and so cannot be mass-manufactured. All this makes installation and maintenance costs very much greater, hindering the obtaining of profits from such systems on the basis of the energy output obtained.

International patent application WO 02/48544 A1 relates to a system for generating energy from sea waves that resolves the aforesaid disadvantages.

Said system includes at least one floating body, a ballast, a connecting chain or cable between said ballast and said floating body and a device provided inside said floating body for converting the movement of the floating body into pneumatic or hydraulic energy, together with means for transmitting the energy to dry land or to a fixed structure.

The device for converting the movement of the floating body to which the aforesaid patent relates includes a traction system which has as its main element a drum on which the connecting chain or cable with the floating body winds. This traction system has the task of converting the force and vertical linear movement of the buoy through the cable into rotary movement of the drum with a certain rotating moment. The conversion device also includes a recovery device for making the drum rotate in the opposite direction when the floating body descends with the wave, and for maintaining at all times suitable cable or chain tension.

Thus, in the system described, when the floating body ascends by floatability under the effect of arrival of the wave, the cable or chain unwinds from the drum. The drum rotates in one direction with a certain rotating moment or shaft torque from the drum itself, and this is transmitted to the energy converting system for the production of pneumatic, electrical or hydraulic energy. When the floating body descends with the wave under the effect of the force of gravity, it is the recovery device that has the task of making the drum rotate in the opposite direction and thereby of recovering the cable or chain to its initial position.

The system described in the aforesaid patent has the advantages of being simple and also resolving the problem of the different tide levels, so that the system can be mass-manufactured. Indeed, the length of the device's cable need not vary depending on the tides, since the recovery device always permits recovery of the chain or cable unwound during the ascent of the wave, so that the length of the cable wound or recovered in a specific sea zone depends on the difference between the low tide and the high tide rather than the forecast height of the waves in that zone.

Another advantage of the system described in international patent WO 02/48544 is that it resolves the problem of corrosion due to the direct action of the sea water, since it discloses a device for converting the movement of the floating body into energy, which device is mounted inside the floating body and above the floatability line of said body.

The system disclosed in international patent application WO 02/48544 nevertheless presents a number of disadvantages, which are set out below:
■ It is still a complex system, since it is necessary to manufacture a large drum, mounted inside the floating body, onto which drum there winds the cable or chain that connects said floating body to the ballast.
■ The cable or chain connecting the floating body to the ballast is submitted to high stresses that reduce its useful life, for in addition to the tensile and flexion forces, said chain or cable is also submitted to the torsion force generated by the action of marine currents and other outside agents, due to the rotation of the entire floating body around an imaginary vertical axis.
■ In the event of the floating body having to be repaired, the point of anchorage to the sea bed is inevitably lost, since the fact that no intermediate buoy exists means that the connecting cable of the floating body is attached directly to the sea bed ballast.
■ The design of the floating body is complex because it includes two elements with different functions; a float on the lower part and a receptacle mounted on said float to house the components of the energy-converting device.
■ The floating body is not stable and can easily overturn, since the components of the energy-converting device are above the floatability line, so that the centre of gravity of the floating body is also above the floatability centre.
■ Periodic maintenance of the outer surface of the floating body has to be carried out in order to remove marine incrustations.

Patent US 2002/0131824 A1 describes a floating platform to obtain electric power from sea waves. Said floating platform is fixed to sea bottom, provided with a lathe in that an anchorage cable is rolled by a recoverable spring, they allow to transform the kinetic energy of the waves in electricity by connecting the axis of lathe to electricity generators, electricity generators to rectifiers circuits, and rectifiers circuits to electric accumulators.

### DESCRIPTION OF THE INVENTION

The objective of this invention is to resolve the disadvantages mentioned, by developing a system having the advantages set out below.

According to a first aspect, the system of this invention for generating energy from sea waves includes at least one floating body, a ballast, a ballast chain or cable, at least one connecting cable or chain between said ballast chain or cable and said floating body, means for converting the movement of said floating body into mechanical energy, at least one recovery device situated inside said floating body that permits recovery of said cable or chain to its initial position during the descent of the wave, at least one device for converting said mechanical energy into energy other than mechanical energy, situated inside said floating body, means for transmitting said energy to dry land or to a fixed structure, and is characterised in that said floating body is mounted on a structure and in that it includes at least one horizontal shaft integral by its ends to said structure; in that said means for converting the movement of said floating body into mechanical energy include a moving housing around which the connecting cable or chain winds, with said housing being mounted in rotating fashion in relation to said horizontal shaft, in such a way that it rotates under the action of said wound cable or chain.

Thanks to these characteristics, the system of this invention has the advantages set out below:
■ The moving housing of the floating body itself acts as a drum of the system on which the connecting chain or cable winds, so that it is not necessary to instal a large drum inside the floating body.
■ The design of the floating body is very simple, since it consists of a single element which has two functions; one of acting as a float, providing the floatability force for generating energy, and the other of acting as a receptacle for housing the components of the mechanical energy conversion device, leaving said components isolated from the direct action of the sea water.
■ The floating body is stable, so that the use of counterweights is not necessary. Indeed, the fact that the same element of the floating body carries out the functions of float and receptacle for fitting the components of the device, means that the centre of floatability remains above the centre of gravity, so that said floating body is unlikely to overturn.
■ There exists a specific cable for ballasting the body, which is independent from the connecting cable that it winds on the floating body. Said specific ballast cable, as it does not have to wind and unwind, can be oversized or designed so that the torsional force to which it is submitted does not reduce its useful life.

According to a preferred embodiment of the invention, the at least one device for converting said mechanical energy includes electrical generator and means for transmitting said mechanical energy to said generator.

Preferably, said means of transmitting the mechanical energy to said generator include an interior crown gear attached so as to form part of the moving housing, a pinion that meshes with said crown gear and a multiplier attached to said pinion.

Thanks to these characteristics, with the system of this invention the mechanical energy which is obtained from the movement of the moving housing of the floating body is converted directly into electrical energy.

Preferably, the electrical energy obtained is processed by means of power electronics technology to ensure the continuous transmission of electrical energy. The flow fed into the electricity network will thereby be as constant and stable as possible.

In accordance with a preferred embodiment of the invention, the system includes at least two floating bodies mounted on said structure and at least two parallel horizontal shafts integral by their ends to said structure, with the cables or chains of said floating bodies wound in the opposite direction on the moving housings of the floating bodies, in such a way that they rotate in opposite directions to one another due to the action of said wound cables or chains.

The presence of two floating bodies mounted on a single structure ensures in a very simple and effective way that the energy generating system of this invention is physically stable, an essential condition for obtaining the recovering force from the recovery device and the reaction force from the means for transforming the mechanical energy into electrical energy (electrical generator).

Preferably, the recovery device includes a coil spring, said spring being attached by one of its ends to the horizontal shaft integral to the structure and by another of its ends to the moving housing of said floating body.

Said coil spring constitutes a simple mechanical solution that allows energy to be stored during the ascent of the floating body, in the form of elastic potential energy. Said energy is released when the floating body descends with the wave, making the floating body rotate in the opposite direction and thus be able to recover the connecting chain or cable.

Preferably, the structure on which said at least floating body is mounted includes at least one profile parallel to said at least one horizontal shaft and means for cleaning off the marine incrustations on the outer face of said moving housing, attached to said profile and to said structure.

Advantageously, said means for cleaning off the incrustations are scrapers.

Thanks to these characteristics, the system of this invention automatically cleans itself "in situ", so it is not necessary to carry out periodic maintenance of the outer surface of the floating body or bodies in order to remove the marine incrustations.

In accordance with the invention, said system includes at least one intermediate buoy attached to said ballast chain or cable. Thanks to said buoy the system has an intermediate anchoring point that has two advantages. On the one hand it permits the anchorage to be kept at a reasonable depth, permitting removal of the floating body and, if necessary, its replacement by another such body, without losing the anchoring point. And on the other hand, the floatability of the intermediate buoy discharges to the floating body the weight of the ballast chain or cable, which, depending on the depth of the sea bed, is by no means insignificant.

According to a preferred embodiment of the invention, said system includes a plurality of modules, each of them formed by at least one floating body and, advantageously, each module is formed of at least said floating body and at least said intermediate buoy attached to said ballast chain or cable.

Thanks to the modular design, the system adapts simply and easily to the type of swell in the geographical zone. Thus, in order to take advantage of waves of small amplitudes and small wavelengths, the system would be fitted with few modules, while to take advantage of waves of large dimensions the system would be fitted with a larger number of modules.

Preferably, the structure of the system includes means for guiding said connecting cable or chain, which means make possible an optimal connection between the connecting chain or cable of the floating body and the ballast chain, or the intermediate buoy, if applicable.

### BRIEF DESCRIPTION OF THE DRAWINGS

For a better understanding of all that has been set out some drawings are included which show, schematically and solely by way of non-restrictive example, a practical case of embodiment.

In said drawings,
Figure 1 is a perspective view of a preferred embodiment of the system of the invention that includes one module with two floating bodies and one intermediate buoy.
Figure 2 is a detail of the perspective view of Figure 1, showing the recovery device situated inside said floating bodies.
Figure 3 is a perspective view of the interior of a floating body, showing a detail of the device for converting the mechanical energy into electrical energy.
Figure 4 is a perspective view of a preferred embodiment of the system of the invention that includes two modules, each one of them formed by two floating bodies and one intermediate buoy.
Figure 5 is a perspective view of a preferred embodiment of the system of the invention that includes 16 modules, each one of them formed by two floating bodies and one intermediate buoy.

### DESCRIPTION OF A PREFERRED EMBODIMENT

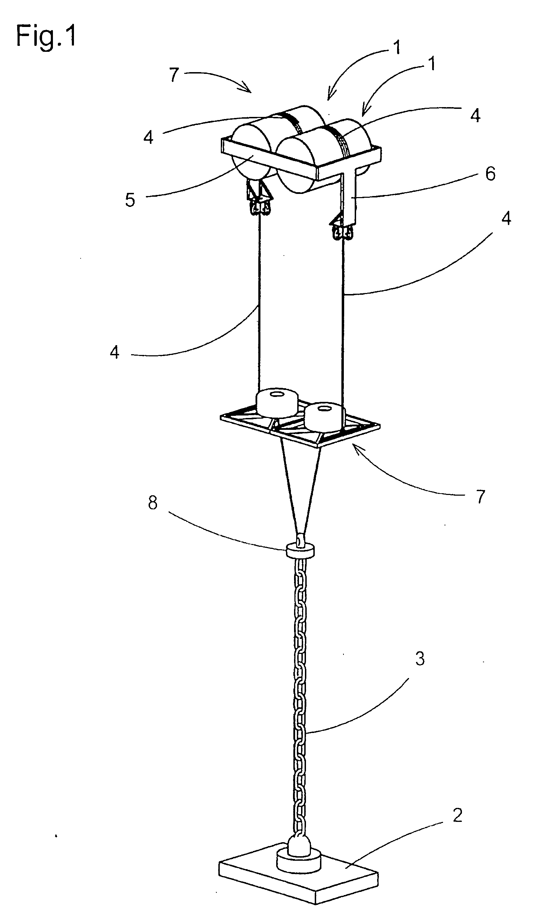

Figure 1 shows a perspective view of a preferred embodiment of the system of the invention which includes a module 17 with two floating bodies 1, a ballast 2, a ballast chain 3, a cable 4 wound on each one of the floating bodies 1 and a structure 5 on which said floating bodies 1 are mounted. The structure 5 includes means 6 for guiding the cables 4 to an intermediate buoy 7. Said intermediate buoy 7 is submerged at a depth of some 20 metres and is anchored onto the ballast 2 situated on the sea bed by means of the ballast chain 3.

The intermediate buoy 7 provides an intermediate anchorage 8 which has the advantage of allowing the anchorage point of the floating body or floating bodies of the system to be maintained at a reasonable depth.

As Figure 1 shows, from each floating body 1 there descends vertically a cable 4 which passes through the guiding means 6 to the intermediate buoy 7. Thanks to said guiding means 6 and to the way in which said cables 4 are secured to said intermediate buoy 7, losses of energy due to friction are prevented in so far as possible.

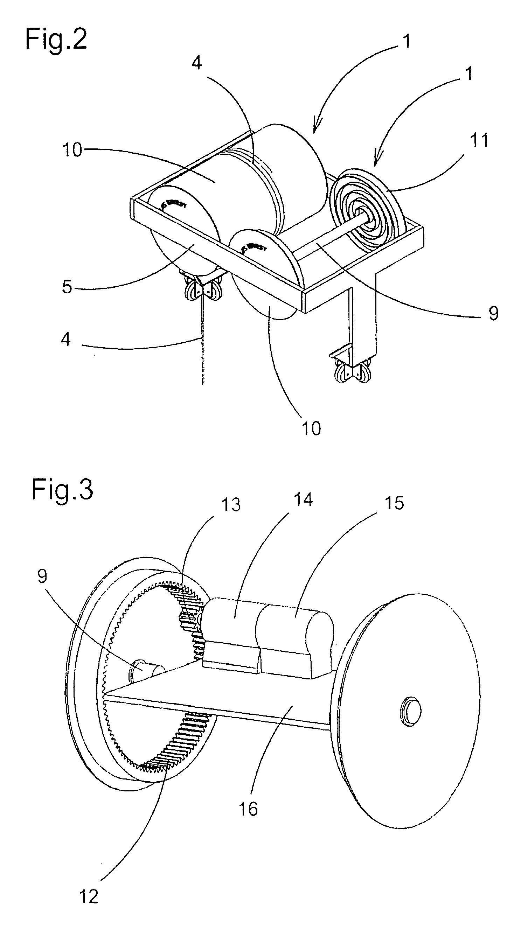

Figure 2 shows the interior of one of the two floating bodies 1 of Figure 1, in which a horizontal static shaft 9 integral by its ends to the structure 5 can be discerned. Said static shaft 9 constitutes the axis in relation to which the moving housing 10 of each one of the floating bodies 1 rotates, due to the action of the wound cable 4.

As can be observed in Figure 2, the recovery device of the system is a coil spring 11 whose interior end is attached to the static shaft 9 and whose exterior end is attached to the interior face of the housing 10. Said spring 11 is fitted with a certain pre-tensioning in order to ensure the tension of the ballast chain 3 and of the connecting cable 4, and has the task of recovering said cable 4 from each one of the floating bodies 1 when the unit as a whole descends with the movement of the wave.

The structure 5 of the system shown includes all round its interior periphery some scrapers, not shown, which take advantage of the rotary movement of the moving housing 10 of the floating bodies 1 to clean the marine incrustations from the exterior surface of said bodies 1.

Figure 3 is a perspective view of the interior of a floating body 1, showing a detail of the device for converting the mechanical energy into energy other than mechanical energy, in this case electrical energy.

Said figure shows an interior crown gear 12 which is integral to the interior surface of the floating body 1 housing 10, a pinion 13 which meshes with said crown gear 12, a multiplier 14 attached to said pinion 12 and, finally, a generator 15 of electrical energy. Both the multiplier 14 and the generator 15 are placed on a platform 16 integral to the static shaft 9. The multiplier 14 has the function of adapting the speed transmitted to the shaft so that the generator 15 works under optimal conditions, being able to vary its transmission ratio if necessary.

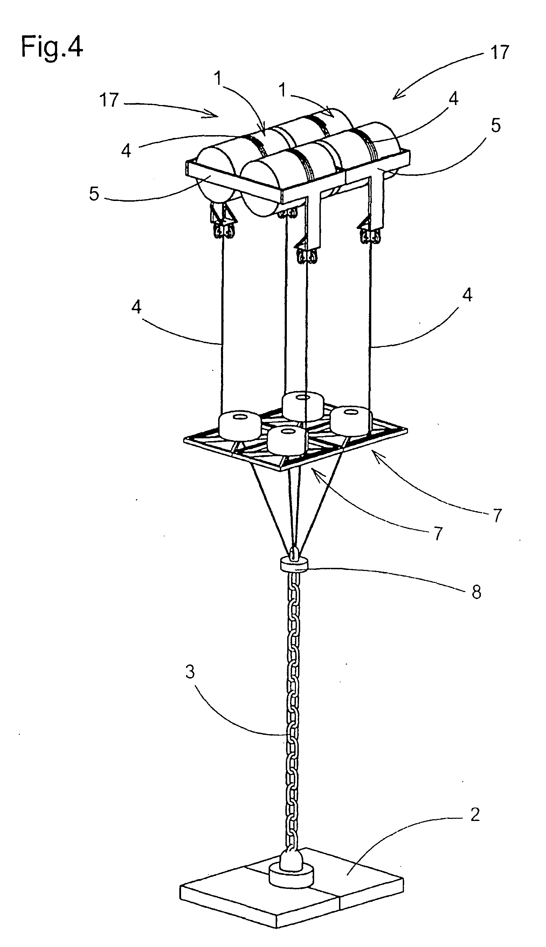

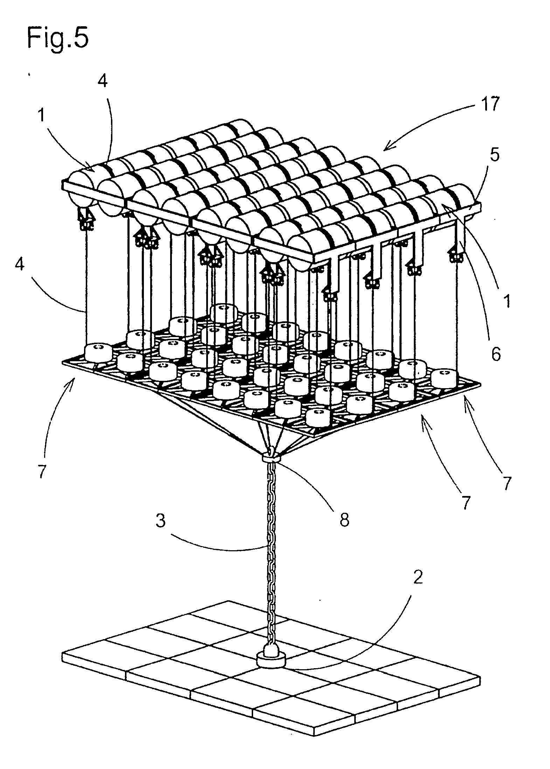

Figures 4 and 5 show two perspective views of two preferred embodiments of the system of the invention, comprising two and sixteen modules 17, respectively. The first of them is optimum for geographical zones with small-amplitude, small-wavelength waves, while the second is optimum for zones with great wave amplitudes and lengths.

There follows a description of how the system works.

In a calm-sea situation, the system remains in equilibrium. The cable 4 is wound on the moving housing 10 of the floating body and remains tensed by the effect of the coil spring 11.

When the water level rises under the effect of arrival of a wave the floating body 1 receives the thrust of the wave and starts its ascending travel. The cable 4 unwinds, causing the moving housing 10 of the floating body to rotate in relation to the static shaft 9 integral to the structure 5. The rotary movement of the housing 10 is transmitted to the electrical generator 15 housed inside the floating body 1, through the crown gear 12, from the pinion 13 which meshes with said crown gear and from the multiplier 14 attached to said pinion.

Thus, in the preferred embodiments of the system shown in Figures 1 to 5, the movement of the floating body 1 is converted into the mechanical energy which moves the housing 10, and the latter into the electrical energy produced by the generator 15.

The electrical energy obtained with the generator 15 of one or several floating bodies will be processed by means of power electronics technology in order to ensure continuous transmission of the electrical energy.

Although they have not been shown, there exist other embodiments of the system of this invention, in which the mechanical energy that moves the housing 10 can be converted into any other type of energy, such as pneumatic energy, by means of a compressor connected to the transmission, or such as hydraulic energy, by means of a pump connected to the transmission.

When the water level descends due to the descent of the wave, the cable 4 winds in under the effect of the coil spring 11, causing the housing 10 of the floating body 1 to rotate in a direction opposite to the direction in which it had been rotating during the unwinding. The energy used by the spring 11 to recover the cable 4 is that which had been stored during the ascent of the wave in the form of elastic potential energy.

In the embodiments shown in Figures 1 to 5, each module is made up of two floating bodies whose housings 10 rotate, one in the opposite direction to the other, so that the system is physically stable.

The system of this invention has the advantage that it makes it possible to obtain energy in a simple and effective way, which advantage means a major reduction in the costs of installation and maintenance of the system.

## Claims

1. Energy generating system using sea waves, which includes at least one floating body (1), a ballast (2), a ballast chain or cable (3), at least one connecting cable or chain (4) between said ballast chain or cable (3) and said floating body (1), means for converting the movement of said floating body (1) into mechanical energy, at least one recovery device, situated inside said floating body (1) that permits recovery of said cable or chain (4) to its initial position during the descent of the wave, at least one device for converting said mechanical energy into energy other than mechanical energy, situated inside said floating body (1), and means for transmitting said energy to dry land or to a fixed structure, whereby said floating body (1) is mounted on a structure, (5), whereby it includes at least one horizontal shaft (9) integral by its ends to said structure (5), and whereby said means for converting the movement of said floating body (1) into mechanical energy include a moving housing (10) around which the connecting cable or chain (4) winds, with said housing (10) being mounted in rotating fashion in relation to said horizontal shaft (9), in such a way that it rotates under the action of said wound cable or chain (4).

2. Energy generating system according to Claim 1, **characterised in that** said at least one device for converting the mechanical energy includes an electrical generator (15) and means for transmitting said mechanical energy to said generator (15).

3. Energy generating system according to Claim 2, **characterised in that** said means of transmitting said mechanical energy to said generator (15) include an interior crown gear (12) attached so as to form part of the moving housing (10), a pinion (13) that meshes with said crown gear (12) and a multiplier (14) attached to said pinion (13).

4. Energy generating system according to Claim 1, **characterised in that** it includes at least two floating bodies (1) mounted on said structure (5) and at least two parallel horizontal shafts (9) integral by their ends to said structure (5), with the cables or chains (4) of said floating bodies wound in the opposite direction on the moving housings (10) of the floating bodies (1), in such a way that they rotate in opposite directions to one another due to the action of said wound cables or chains (4).

5. Energy generating system according to Claim 1, **characterised in that** said recovery device includes a coil spring (11), said spring (11) being attached by one of its ends to the horizontal shaft (9) integral to the structure (5) and by another of its ends to the moving housing (10) of said floating body (1).

6. Energy generating system according to Claim 1, **characterised in that** said structure (5) includes at least one profile parallel to said at least one horizontal shaft (9) and means for cleaning off the marine incrustations on the outer face of said moving housing (10), attached to said profile and to said structure (5).

7. Energy generating system according to Claim 6, **characterised in that** said means for cleaning off the incrustations are scrapers.

8. Energy generating system according to Claim 1, **characterised in that** it includes at least one intermediate buoy (7) attached to said ballast chain or cable (3).

9. Energy generating system according to Claim 1, **characterised in that** it includes a plurality of modules (17), each of them formed of at least one floating body (1).

10. Energy generating system according to Claims 8 and 9, **characterised in that** each module (17) is formed by at least said floating body (1) and by at least said intermediate buoy (7) attached to said ballast chain or cable (3).

11. Energy generating system according to Claims 1 or 6, **characterised in that** said structure (5) includes means for guiding said connecting cable or chain (4).

## Patentansprüche

1. Energieerzeugungssystem, das Meereswellen nutzt, umfassend: wenigstens einen Schwimmkörper (1), einen Ballast (2), eine Ballastkette oder ein Ballastseil (3), wenigstens ein Verbindungsseil oder eine Verbindungskette (4) zwischen der Ballastkette oder dem Ballastseil (3) und dem Schwimmkörper (1), Mittel zum Umwandeln der Bewegung des Schwimmkörpers (1) in mechanische Energie, wenigstens eine innerhalb des Schwimmkörpers (1) angeordnete Rückstellvorrichtung, die es ermöglicht, das Seil oder die Kette (4) während des Abfallens der Welle in seine Ausgangsposition rückzustellen, wenigstens eine Vorrichtung zum Umwandeln der mechanischen Energie in eine andere Energie als mechanische Energie, die innerhalb des Schwimmköpers (1) angeordnet ist, und Mittel zum Übertragen der Energie zum Festland oder zu einer befestigten Anordnung, wobei der Schwimmkörper (1) an einer Anordnung (5) angebracht ist, die wenigstens eine horizontale Welle (9) beinhaltet, die mit den Enden an der Anordnung (5) angebaut ist, und wobei das Mittel zum Umwandeln der Bewegung des Schwimmkörpers (1) in mechanische Energie ein bewegliches Gehäuse (10) beinhaltet, um das das Verbindungsseil oder die Verbindungskette (4) gewunden wird, wobei das Gehäuse (10) drehbar relativ zu der horizontalen Welle (9) auf eine Weise befestigt ist, dass es sich unter der Einwirkung des aufgerollten Seils oder der Kette (4) dreht.

2. Energieerzeugungssystem nach Anspruch 1, **dadurch gekennzeichnet, dass** die wenigstens eine Vorrichtung zum Umwandeln der mechanischen Energie einen elektrischen Generator (15) und Mittel zum Übertragen der mechanischen Energie zu dem Generator (15) beinhaltet.

3. Energieerzeugungssystem nach Anspruch 2, **dadurch gekennzeichnet, dass** das Mittel zum Übertragen der mechanischen Energie zu dem Generator (15) einen innen verzahnten Zahnkranz (12), der so angebracht ist, dass er einen Teil des beweglichen Gehäuses (10) bildet, ein Ritzel (13), das mit dem innen verzahnten Zahnkranz (12) kämmt und ein Übersetzungsgetriebe (14), das an dem Ritzel (13) angebracht ist, aufweist.

4. Energieerzeugungssystem nach Anspruch 1, **dadurch gekennzeichnet, dass** es wenigstens zwei Schwimmkörper (1) beinhaltet, die an der Anordnung (5) angebracht sind und wenigstens zwei parallele horizontale Wellen (9) beinhaltet, die mit ihren Enden an der Anordnung (5) angebaut sind, wobei die Seile oder Ketten (4) der Schwimmköper in entgegen gesetzter Richtung auf den beweglichen Gehäusen (10) von den Schwimmkörpern (1) auf so eine Weise aufgerollt werden, dass sie sich entsprechend der Bewegung der aufgerollten Seile oder Ketten (4) in verschiedene Richtungen zueinander drehen.

5. Energieerzeugungssystem nach Anspruch 1, **dadurch gekennzeichnet, dass** die Rückstellvorrichtung eine Spiralfeder (11) beinhaltet, wobei die Feder (11) mit einem ihrer Enden an der horizontalen Welle (9), die an der Anordnung (5) angebaut ist, angebracht ist und mit einem anderen ihrer Enden an dem beweglichen Gehäuse (10) von dem Schwimmkörper (1) angebracht ist.

6. Energieerzeugungssystem nach Anspruch 1, **dadurch gekennzeichnet, dass** die Anordnung (5) wenigstens ein zu der wenigstens einen horizontalen Welle (9) paralleles Profil beinhaltet und Mittel zum Entfernen des Meeresbelags an der äußeren Oberfläche des beweglichen Gehäuses (10) beinhaltet, die an dem Profil und an der Anordnung (5) angebracht sind.

7. Energieerzeugungssystem nach Anspruch 6, **dadurch gekennzeichnet, dass** die Mittel zum Entfernen des Belags Abstreifer sind.

8. Energieerzeugungssystem nach Anspruch 1, **dadurch gekennzeichnet, dass** es wenigstens einen Zwischenauftriebskörper (7) aufweist, der an der Ballastkette oder dem Ballastseil (3) angebracht ist.

9. Energieerzeugungssystem nach Anspruch 1, **dadurch gekennzeichnet, dass** es eine Mehrzahl von Modulen (17) aufweist, die jeweils aus mindestens einem Schwimmkörper (1) gebildet sind.

10. Energieerzeugungssystem nach Anspruch 8 und 9, **dadurch gekennzeichnet, dass** jedes Modul (17) aus wenigstens einem Auftriebskörper (1) und aus wenigstens einem Zwischenauftriebskörper (7), der an der Ballastkette oder dem Ballastseil (3) befestigt ist, gebildet ist.

11. Energieerzeugungssystem nach Anspruch 1 oder 6, **dadurch gekennzeichnet, dass** die Anordnung (5) Mittel zum Führen des Seils oder der Kette (4) aufweist.

## Revendications

1. Système de production d'énergie à l'aide de la houle, qui comprend au moins un corps flottant (1), un lest (2), une chaîne ou câble de lest (3), au moins un câble ou chaîne de raccordement (4) entre ladite chaîne ou ledit câble de lest (3) et ledit corps flottant (1), des moyens pour convertir le mouvement dudit corps flottant (1) en une énergie mécanique, au moins un dispositif de récupération, situé à l'intérieur dudit corps flottant (1) qui permet la récupération dudit câble ou ladite chaîne (4) à sa position initiale pendant la descente de la vague, au moins un dispositif pour convertir ladite énergie mécanique en une énergie autre que l'énergie mécanique, situé à l'intérieur dudit corps flottant (1), et des moyens pour transmettre ladite énergie à la terre ferme ou à une structure fixe, grâce à quoi ledit corps flottant (1) est monté sur une structure (5), grâce à quoi il comprend au moins un arbre horizontal (9) solidaire à ses extrémités à ladite structure (5), et grâce à quoi lesdits moyens pour convertir le mouvement dudit corps flottant (1) en une énergie mécanique comprend un boîtier mobile (10) autour duquel le câble ou chaîne de raccordement (4) s'enroule, ledit boîtier (10) étant monté à rotation par rapport audit arbre horizontal (9), de telle manière qu'il tourne sous l'action dudit câble ou de ladite chaîne enroulée (4).

2. Système de production d'énergie selon la revendication 1, **caractérisé en ce que** ledit au moins un dispositif de production pour convertir l'énergie mécanique comprend un générateur électrique (15) et des moyens de transmission de ladite énergie mécanique audit générateur (15).

3. Système de production d'énergie selon la revendication 2, **caractérisé en ce que** lesdits moyens de transmission de ladite énergie mécanique audit générateur (15) comprend une couronne à denture (12) fixée afin de former une partie du logement mobile (10), un pignon (13) qui s'engrènent avec ladite couronne dentée (12) et un multiplicateur (14) fixé audit pignon (13).

4. Système de production d'énergie selon la revendication 1, **caractérisé en ce qu'**il comprend au moins deux corps flottants (1) montés sur ladite structure (5) et au moins deux arbres horizontaux parallèles (9) solidaires à leurs extrémités avec ladite structure (5), avec les câbles ou chaînes (4) desdits corps flottants enroulés dans la direction opposée sur les boîtiers mobiles (10) des corps flottant (1), de telle manière qu'ils tournent dans des directions opposées l'un par rapport à l'autre en raison de l'action desdits câbles ou desdites chaînes enroulé(e)s (4).

5. Système de production d'énergie selon la revendication 1, **caractérisé en ce que** ledit dispositif de récupération comprend un ressort à enroulement (11), ledit ressort (11) étant fixé par une de ses extrémités à l'arbre horizontal (9) solidaire de la structure (5) et par une autre de ses extrémités au boîtier mobile (10) dudit corps flottant (1).

6. Système de production d'énergie selon la revendication 1, **caractérisé en ce que** ladite structure (5) comprend au moins un profilé parallèle audit au moins un arbre horizontal (9) et des moyens de nettoyage des incrustations marines sur la face extérieure dudit boîtier mobile (10), fixés audit profilé et à ladite structure (5).

7. Système de production d'énergie selon la revendication 6, **caractérisé en ce que** lesdits moyens de nettoyage des incrustations sont des racleurs.

8. Système de production d'énergie selon la revendication 1, **caractérisé en ce qu'**il comprend au moins une bouée intermédiaire (7) fixée à ladite chaîne ou audit câble de lest (3).

9. Système de production d'énergie selon la revendication 1, **caractérisé en ce qu'**il comprend une pluralité de modules (17), chacun d'eux étant formé d'au moins un corps flottant (1).

10. Système de production d'énergie selon les revendications 8 et 9, **caractérisé en ce que** chaque module (17) est formé par au moins ledit corps flottant (1) et par au moins ladite bouée intermédiaire (7) fixé à ladite chaîne ou audit câble de lest (3).

11. Système de production d'énergie selon les revendications 1 ou 6, **caractérisé en ce que** ladite structure (5) comprend des moyens de guidage dudit câble ou de ladite chaîne de raccordement (4).
